# EUROPEAN PATENT APPLICATION

(11) **EP 4 235 434 A1**
(43) Date of publication of application: **30.08.2023**
(21) Application number: 20963087.0
(22) Date of filing: 30.11.2020
(51) Int. Cl.: G06F 11/30

(54) **POWER CONSUMPTION CONTROL APPARATUS, PROCESSOR, AND POWER CONSUMPTION CONTROL METHOD**

(71) Applicant: Huawei Technologies Co., Ltd., Shenzhen, Guangdong 518129 (CN)
(72) Inventor: JIN, Wei, Shenzhen, Guangdong 518129 (CN); NIU, Yipu, Shenzhen, Guangdong 518129 (CN); MAO, Huihui, Shenzhen, Guangdong 518129 (CN); CHEN, Shang, Shenzhen, Guangdong 518129 (CN); YAN, Yufeng, Shenzhen, Guangdong 518129 (CN)
(74) Representative: MERH-IP Matias Erny Reichl Hoffmann Patentanwälte PartG mbB
(86) International application number: PCT/CN2020/132905
(87) International publication number: WO 2022/110199

(57) **Abstract**

A power consumption control apparatus, a processor, and a power consumption control method are disclosed, to improve accuracy of power consumption regulation. The power consumption control apparatus includes a constant-frequency clock generator and a power consumption regulator. The power consumption regulator is connected to one or more processing units in a system-on-a-chip. The constant-frequency clock generator provides a constant-frequency clock signal for the power consumption regulator. The power consumption regulator obtains power consumption caused by the one or more processing units in a period of time, and regulates current power consumption of the one or more processing units based on the power consumption. Because historical power consumption can better reflect a real status of the processing unit, a regulation policy determined based on the historical power consumption can also better meet a current requirement of the processing unit, thereby helping improve accuracy of power consumption regulation. In addition, in this manner, the power consumption of the one or more processing units in the processor may be regulated as required. Therefore, a regulation granularity is finer, and a regulation manner is more flexible.

## Description

### TECHNICAL FIELD

This application relates to the field of processor technologies, and in particular, to a power consumption control apparatus, a processor, and a power consumption control method.

### BACKGROUND

When a processor is delivered from a factory, some standard maximum workload such as maximum power consumption is usually defined for a component (such as each processing unit) in the processor. Generally, power consumption of the processor during use cannot exceed the maximum power consumption of the processor. Otherwise, the processor may be in an overcurrent, overvoltage, or overheating state, or the like, and this affects a service life of the component in the processor. However, actual power consumption of the processor is actually determined by a load. Larger load indicates larger power consumption of the processor. In this case, if the power consumption of the processor is not limited, it is very likely that the power consumption of the processor exceeds a limit for long time when the load is relatively heavy, and this is not conducive to normal operation or maintenance of each component in the processor.

However, there is still a lack of research on power consumption limitation of the processor in an existing solution. For example, in an existing solution, the processor corresponds to a preset load threshold. When it is determined that a current load of the processor is greater than the preset load threshold, the power consumption of the processor is reduced. It is clear that, in this manner, the power consumption is directly regulated based on the fixed load threshold, and the fixed load threshold cannot clearly reflect a real status of the processor. Consequently, accuracy of regulating the power consumption in this manner is relatively low.

### SUMMARY

This application provides a power consumption control apparatus, a processor, and a power consumption control method, to resolve a technical problem that power consumption regulation is inaccurate because power consumption of the processor is regulated by using a fixed load threshold in a conventional technology.

According to a first aspect, this application provides a power consumption control apparatus, including a constant-frequency clock generator and a power consumption regulator, where the power consumption regulator is connected to one or more processing units in a system-on-a-chip (system-on-a-chip, SoC). The constant-frequency clock generator may generate a constant-frequency clock signal and provide the constant-frequency clock signal for the power consumption regulator. The power consumption regulator may obtain, by an operating clock provided by the constant-frequency clock signal, power consumption caused by the one or more processing units in a period of time, and regulate current power consumption of the one or more processing units based on the power consumption.

In the foregoing design, current power consumption of the processing unit is regulated based on historical power consumption of the processing unit. Because the historical power consumption can better reflect a real status of the processing unit, a regulation policy determined based on the historical power consumption can also better meet a current requirement of the processing unit, thereby helping improve accuracy of power consumption regulation. Further, in this manner, the one or more processing units in a processor instead of the entire processor may be regulated as required. Therefore, in this manner, power consumption of the processor can be regulated more flexibly at a finer granularity. In addition, in this solution, the clock generator is separately designed for the power consumption regulator, and this helps implement decoupling between the power consumption regulator and the processing unit. In this way, normal operation of the processing unit is not affected, and power consumption of another processing unit can be continuously regulated when the processing unit is faulty. Therefore, reliability of the power consumption control apparatus is relatively high.

In an optional design, when the one or more processing units include at least two processing units, the one or more processing units may be located in a same voltage domain, and different processing units in the one or more processing units may use different operating clocks. In this design, at least two processing units with a common voltage and different frequency can be regulated together, and this not only helps improve flexibility of power consumption regulation, but also saves processing resources.

In an optional design, the power consumption regulator may first determine a value of the one or more processing units in a preset current indicator based on the power consumption caused by the one or more processing units in the period of time. When the value of the one or more processing units in the preset current indicator meets a first regulation threshold corresponding to the preset current indicator, the current power consumption of one or more processing units is regulated based on a regulation amplitude corresponding to the first regulation threshold. The first regulation threshold is one of at least two regulation thresholds corresponding to the preset current indicator, and each of the at least two regulation thresholds corresponds to one regulation amplitude. In the foregoing design, by setting regulation thresholds of a plurality of levels, the power consumption control apparatus can sequentially detect the regulation thresholds of all levels in ascending order. In this way, the power consumption control apparatus can gradually reduce power consumption based on regulation amplitudes in ascending order instead of directly reducing the power consumption to very little. This helps maintain a processing capability of the processing unit as much as possible.

In an optional design, the preset current indicator may include a peak current indicator and/or a current change rate indicator. In this design, a current power consumption status can be determined by detecting a current-related indicator. In this way, regulating power consumption based on the current-related indicator can maintain a normal state of a current as much as possible, and avoid an overcurrent phenomenon or an unstable current phenomenon of the processing unit.

In an optional design, when the preset current indicator includes the peak current indicator, if a peak current of the one or more processing units in the period of time meets a plurality of regulation thresholds corresponding to the peak current indicator, the first regulation threshold is a largest regulation threshold in the plurality of regulation thresholds that are met. In the foregoing design, a maximum peak current threshold in present met peak current thresholds can reflect a present worst circuit environment of the processing unit, and power consumption is regulated by using a maximum regulation amplitude corresponding to the maximum peak current threshold, so that the processing unit can be kept away from the worst circuit environment as soon as possible, and exit an overcurrent state of the processing unit in a timely manner.

In an optional design, when the preset current indicator includes the current change rate indicator, if a current change rate of the one or more processing units in the period of time meets a plurality of regulation thresholds corresponding to the current change rate indicator, the first regulation threshold is a regulation threshold with a largest absolute value in the plurality of regulation thresholds that are met. In the foregoing design, a maximum positive value of a current change rate and a minimum negative value of the current change rate can indicate a present most unstable state of the processing unit, and power consumption is regulated based on a regulation amplitude corresponding to the most unstable state, so that the processing unit can be stabilized around a present current as soon as possible, and a stable state of the processing unit is restored in a timely manner.

In an optional design, the power consumption control apparatus further includes a storage unit connected to the power consumption regulator. The storage unit may store, based on a preset periodicity, power consumption caused by the one or more processing units in each periodicity. Correspondingly, the power consumption regulator may further obtain, from the storage unit, power consumption caused by the one or more processing units in any periodicity, and use the power consumption as the power consumption caused by the one or more processing units in the period of time. In this design, power consumption of each processing unit is obtained in a periodicity manner, and this helps implement power consumption control of each processing unit in an entire time dimension.

In an optional design, the storage unit may include K memories, the K memories respectively correspond to K preset periodicities, and K is a positive integer greater than or equal to 2. In this case, any one of the K memories may store, based on a preset periodicity corresponding to the memory, power consumption caused by the one or more processing units in each preset periodicity corresponding to the memory. In this way, the power consumption control apparatus can control the power consumption of the processing unit in different time dimensions based on power consumption caused by the processing unit in preset periodicities, to further improve fineness of power consumption control in the time dimensions.

In an optional design, the power consumption control apparatus further includes one or more power consumption calculator groups, one or more power consumption accumulators, and a power consumption statistics collector that separately correspond to the one or more processing units. Each of the one or more power consumption calculator groups includes a plurality of power consumption calculators, and the plurality of power consumption calculators included in each power consumption calculator group are respectively connected to a plurality of processor cores in a corresponding processing unit. A plurality of power consumption calculators included in a power consumption calculator group corresponding to any processing unit are connected to a power consumption accumulator corresponding to the storage unit. The one or more power consumption accumulators are connected to the power consumption statistics collector. In this case, a power consumption calculator connected to any processor core may obtain power consumption signals of the processor core in each instantaneous time period, obtain, through calculation based on the power consumption signals, power consumption caused by the processor core in each instantaneous time period, and send the power consumption to a connected power consumption accumulator. Any power consumption accumulator may accumulate power consumption that is caused by processor cores in a same instantaneous time period and that is sent by connected power consumption calculators, to obtain power consumption caused by a corresponding processing unit in each instantaneous time period, and send the power consumption to the power consumption statistics collector. The power consumption statistics collector may accumulate power consumption that is caused by the one or more processing units in instantaneous time periods of one periodicity and that is sent by the one or more power consumption accumulators, to obtain the power consumption caused by the one or more processing units in each periodicity, and send the power consumption to the storage unit. In this design, the power consumption calculator, the power consumption accumulator, and the power consumption statistics collector are disposed, so that periodic control of power consumption of any processing unit or any plurality of processing units can be implemented, thereby improving flexibility of power consumption control of the processing unit.

In an optional design, the power signal corresponding to the any processor core includes one or more of the following content: a toggle signal corresponding to a component that is in the processor core, a level signal corresponding to a component that is in the processor core, a clock gating signal corresponding to a component that is in the processor core, and a register signal corresponding to a register that is in the processor core. In the foregoing design, the power consumption of the processor core is obtained through calculation by collecting statistics on key signals that are relatively closely related to the power consumption, so that the actual power consumption of the processor core can be obtained through calculation as accurately as possible by using more comprehensive information, and normal functions of these key signals in the processor core are not affected, thereby helping maintain normal operation of the processor core.

In an optional design, the power consumption regulator may regulate the power consumption of the one or more processing units in a plurality of manners. Examples are as follows.

Manner 1: The power consumption regulator may be further connected to a frequency regulator corresponding to the one or more processing units. In this case, when the current power consumption of the one or more processing units needs to be reduced, the power consumption regulator may send a frequency reduction regulation instruction to the frequency regulator corresponding to the one or more processing units, so that the frequency regulator corresponding to the one or more processing units reduces operating frequency of the one or more processing units or extends several periodicities and then provides an operating clock for the one or more processing units again. In this design, the power consumption of the processing unit can be regulated by regul ating an operating clock of the processing unit. This helps implement power consumption regulation of a processing unit or some processing units without affecting a normal operating clock of another component on the SoC or the processor.

Manner 2: The power consumption regulator may further be connected to a voltage regulator corresponding to the one or more processing units, and the voltage regulator corresponding to the one or more processing units and the one or more processing units are located on the same SoC. In this case, when the current power consumption of the one or more processing units needs to be reduced, the power consumption regulator may send a voltage reduction regulation instruction to the voltage regulator corresponding to the one or more processing units, so that the voltage regulator corresponding to the one or more processing units reduces an operating voltage of the one or more processing units. In this design, the power consumption of the processing unit can be regulated by regulating an operating voltage of the processing unit. This helps implement power consumption regulation of a processing unit or some processing units without affecting a normal operating voltage of another component on the SoC or the processor.

Manner 3: The power consumption regulator may be further connected to a frequency regulator and a voltage regulator that correspond to the one or more processing units. In this case, when the current power consumption of the one or more processing units needs to be reduced, the power consumption regulator may send a frequency reduction regulation instruction to the frequency regulator corresponding to the one or more processing units, and send a voltage reduction regulation instruction to the voltage regulator corresponding to the one or more processing units, so that the frequency regulator corresponding to the one or more processing units reduces operating frequency of the one or more processing units or extends several periodicities and then provides an operating clock for the one or more processing units again, and the voltage regulator corresponding to the one or more processing units reduces an operating voltage of the one or more processing units. The design can quickly regulate the power consumption of the processing unit by simultaneously regulating the operating clock and the operating voltage of the processing unit, so that the processing unit can avoid a state of abnormal power consumption in a timely manner.

In an optional design, the frequency regulator and/or the voltage regulator corresponding to the one or more processing units and the one or more processing units are located on the same SoC. In the foregoing design, the power consumption control apparatus does not need to cross the SoC to perform off-chip regulation, but may directly perform power consumption regulation in the SoC. In this way, a regulation instruction can be transmitted to the corresponding frequency regulator and/or voltage regulator more quickly, thereby helping improve a speed of power consumption regulation.

According to a second aspect, this application provides a processor, including the power consumption control apparatus according to any one of the first aspect and one or more processing units. The one or more processing units are deployed on a system-on-a-chip SoC, and the power consumption control apparatus may be connected to the one or more processing units, to regulate current power consumption of the one or more processing units based on power consumption caused by the one or more processing units in a period of time.

According to a third aspect, this application provides a power consumption control method. The method is applicable to a power consumption control apparatus. The power consumption control apparatus uses a constant-frequency clock signal as an operating clock, and may be connected to one or more processing units in a system-on-a-chip SoC. The method includes: The power consumption control apparatus obtains power consumption caused by the one or more processing units in a period of time, and regulates current power consumption of the one or more processing units based on the power consumption.

In an optional design, when the one or more processing units include at least two processing units, the one or more processing units are located in a same voltage domain, and different processing units in the one or more processing units use different operating clocks.

In an optional design, the power consumption control apparatus may further determine a value of the one or more processing units in a preset current indicator based on the power consumption caused by the one or more processing units in the period of time. When the value of the one or more processing units in the preset current indicator meets a first regulation threshold corresponding to the preset current indicator, the current power consumption of the one or more processing units is regulated based on a regulation amplitude corresponding to the first regulation threshold. The first regulation threshold is one of at least two regulation thresholds corresponding to the preset current indicator, and each of the at least two regulation thresholds corresponds to one regulation amplitude.

In an optional design, the preset current indicator may include a peak current and/or a current change rate.

In an optional design, when the preset current indicator includes the peak current indicator, if it is determined that a peak current of the one or more processing units in the period of time meets a plurality of regulation thresholds corresponding to the peak current indicator, the power consumption control apparatus uses a largest regulation threshold in the plurality of regulation thresholds that are met as the first regulation threshold.

In an optional design, when the preset current indicator includes the current change rate indicator, if it is determined that a current change rate of the one or more processing units in the period of time meets a plurality of regulation thresholds corresponding to the current change rate indicator, the power consumption control apparatus uses a regulation threshold with a largest absolute value in the plurality of regulation thresholds that are met as the first regulation threshold.

In an optional design, the power consumption control apparatus may further store, based on a preset periodicity, power consumption caused by the one or more processing units in each periodicity, obtain power consumption caused by the one or more processing units in any periodicity, and use the power consumption as the power consumption caused by the one or more processing units in the period of time.

In an optional design, the power consumption control apparatus may further separately store, based on K preset periodicities, power consumption caused by the one or more processing units in each periodicity corresponding to each of the K preset periodicities, then for each preset periodicity, obtain power consumption caused by the one or more processing units in any periodicity corresponding to the preset periodicity, and use the power consumption as the power consumption caused by the one or more processing units in the period of time. K is a positive integer greater than or equal to 2.

In an optional design, the power consumption control apparatus may further obtain, for any one of the one or more processing units, power consumption signals of each processor core in the processing unit in each instantaneous time period, obtain, through calculation based on the power consumption signals, power consumption caused by the processor core in each instantaneous time period, and accumulate power consumption caused by processor cores in the processing unit in a same instantaneous time period, to obtain power consumption caused by the processing unit in each instantaneous time period, and then accumulate power consumption caused by the one or more processing units in instantaneous time periods of one periodicity, to obtain the power consumption caused by the one or more processing units in each periodicity.

In an optional design, a power signal corresponding to any processor core includes one or more of the following content: a toggle signal corresponding to a component that is in the processor core, a level signal corresponding to a component that is in the processor core, a clock gating signal corresponding to a component that is in the processor core, and a register signal corresponding to a register that is in the processor core.

In an optional design, when the current power consumption of the one or more processing units needs to be reduced, the power consumption control apparatus may further send a frequency reduction regulation instruction to a frequency regulator corresponding to the one or more processing units, so that the frequency regulator corresponding to the one or more processing units reduces operating frequency of the one or more processing units or extends several periodicities and then provides an operating clock for the one or more processing units again.

In an optional design, when the current power consumption of the one or more processing units needs to be reduced, the power consumption control apparatus may further send a voltage reduction regulation instruction to a voltage regulator corresponding to the one or more processing units, so that the voltage regulator corresponding to the one or more processing units reduces an operating voltage of the one or more processing units.

In an optional design, when the current power consumption of the one or more processing units needs to be reduced, the power consumption control apparatus may further send a frequency reduction regulation instruction to a frequency regulator corresponding to the one or more processing units, and send a voltage reduction regulation instruction to a voltage regulator corresponding to the one or more processing units, so that the frequency regulator corresponding to the one or more processing units reduces operating frequency of the one or more processing units or extends several periodicities and then provides an operating clock for the one or more processing units again, and the voltage regulator corresponding to the one or more processing units reduces an operating voltage of the one or more processing units.

For beneficial effects corresponding to the designs in the second aspect and the third aspect, refer to the beneficial effects corresponding to the designs in the first aspect. Details are not described herein again.

### BRIEF DESCRIPTION OF DRAWINGS

FIG. 1 is an example of a schematic diagram of a structure of an electronic device;
FIG. 2 is an example of a schematic diagram of a system architecture to which an embodiment of this application is applicable;
FIG. 3 is an example of a specific schematic flowchart of a power consumption regulation method according to an embodiment of this application;
FIG. 4 is an example of a schematic diagram of a peak current regulation table according to an embodiment of this application;
FIG. 5 is an example of a schematic diagram of a current change rate regulation table according to an embodiment of this application;
FIG. 6 is a schematic diagram of a structure of a power consumption control apparatus according to an embodiment of this application; and
FIG. 7 is a schematic diagram of a structure of another power consumption control apparatus according to an embodiment of this application.

### DESCRIPTION OF EMBODIMENTS

The power consumption control apparatus disclosed in this application may be applied to an electronic device having a processing function. In some embodiments of this application, the power consumption control apparatus may be an electronic device or an independent unit. When the power consumption control apparatus is an independent unit, the unit may be embedded in the electronic device, and can perform power consumption control on one or more processing units of the electronic device, to avoid a phenomenon such as overcurrent on the processing unit. In some other embodiments of this application, the power consumption control apparatus may also be a unit encapsulated inside the electronic device, and is configured to implement a power consumption control function of the electronic device. The electronic device may be a portable electronic device including a function such as a personal digital assistant and/or a music player, for example, a mobile phone, a tablet computer, a wearable device (such as a smartwatch) with a wireless communication function, or a vehicle-mounted device. An example embodiment of the portable electronic device includes but is not limited to a portable electronic device using iOS^{®}, Android^{®}, Microsoft^{®}, or another operating system. The portable electronic device may alternatively be, for example, a laptop computer (Laptop) with a touch-sensitive surface (for example, a touch panel). It should be further understood that in some other embodiments of this application, the electronic device may alternatively be a desktop computer with a touch-sensitive surface (for example, a touch panel).

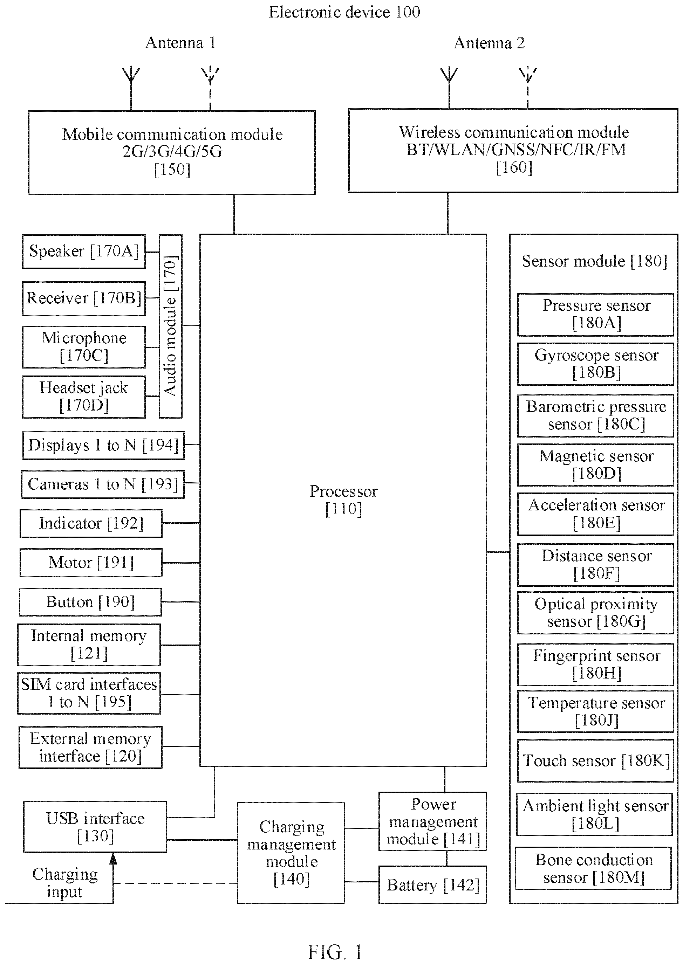

FIG. 1 is an example of a schematic diagram of a structure of an electronic device. It should be understood that an electronic device 100 shown in the figure is merely an example, and the electronic device 100 may have more or fewer components than those shown in the figure, may combine two or more components, or may have different component configurations. Various components shown in the figure may be implemented in hardware including one or more signal processing and/or application-specific integrated circuits, software, or a combination of hardware and software.

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 18011, a temperature sensor 180J, a touch sensor 180K, an ambient light sensor 180L, a bone conduction sensor 180M, and the like. The following specifically describes each part of the electronic device 100 with reference to FIG. 1.

The processor 110 may include one or more chips, for example, may include a system-on-a-chip (system-on-a-chip, SoC) or a chip set formed by a plurality of chips. The processor 110 may include at least one processing unit (or may be referred to as at least one processing subsystem). For example, the at least one processing unit may include a central processing unit (central processing unit, CPU) and a graphics processing unit (graphics processing unit, GPU), and may further include an application processor (application processor, AP), a modem processor, an image signal processor (image signal processor, ISP), a video codec, a digital signal processor (digital signal processor, DSP), a baseband processor, and/or a neural network processing unit (neural network processing unit, NPU). Different processing units may be distributed on different chips, or may be integrated on one chip. Each processing unit may include only one processor core, or may include a plurality of processor cores.

The CPU may be a nerve center and a command center of the electronic device 100. The CPU may generate an operation control signal based on an instruction operation code and a time sequence signal, and complete control of instruction obtaining and instruction execution, where an executed instruction includes but is not limited to an operating system program instruction or an application software program instruction. The GPU may be a visual center of the electronic device 100. The electronic device 100 implements a display function via the GPU, the display 194, the AP, and the like. The GPU is connected to the display 194 and the AP, and is configured to generate a graphic control signal based on the instruction operation code and the time sequence signal, to complete an operation related to a graphic or an image. The processor 110 may include one or more GPUs that execute program instructions to generate or change display information.

A memory may be further disposed in the processor 110, and is configured to store instructions and data. In some embodiments, the memory in the processor 110 is a cache. The memory may store instructions or data that is just used or cyclically used by the processor 110. If the processor 110 needs to use the instructions or the data again, the processor 110 may directly invoke the instructions or the data from the memory, to avoid repeated access, reduce a waiting time of the processor 110, and improve processing efficiency.

In some embodiments, the processor 110 may include one or more interfaces. For example, the interface may include an integrated circuit (inter-integrated circuit, I2C) interface, an integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like. It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The power management module (power management unit, PMU) 141 is configured to connect the battery 142, the charging management module 140, and the processor 110. The charging management module 140 is configured to receive a charging input from a charger. The power management module 141 receives an input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same component.

The external memory interface 120 may be used to connect to an external storage card, for example, a Micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an application program required by at least one function of the operating system, for example, an application program of a sound playing function and an application program of an image playing function. The data storage area may store data created in a process of using the electronic device 100, for example, audio data and a phone book. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instruction stored in the internal memory 121 and/or the instruction stored in the memory disposed in the processor, to execute various functional applications of the electronic device 100 and data processing.

Although not shown in FIG. 1, the electronic device 100 may further include a Bluetooth apparatus, a positioning apparatus, a flash, a micro projection apparatus, a near field communication (near field communication, NFC) apparatus, and the like. Details are not described herein.

The following further describes in detail this application with reference to accompanying drawings. It should be noted that in descriptions of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

In addition, it should be understood that in descriptions of this application, terms such as "first" and "second" are merely used for distinguishing and description, but should not be understood as indicating or implying relative importance, or should not be understood as indicating or implying a sequence. For example, a "first clock generator" and a "first clock generator" merely indicate different clock generators as an example, and do not mean that the two clock generators have different importance degrees or priorities.

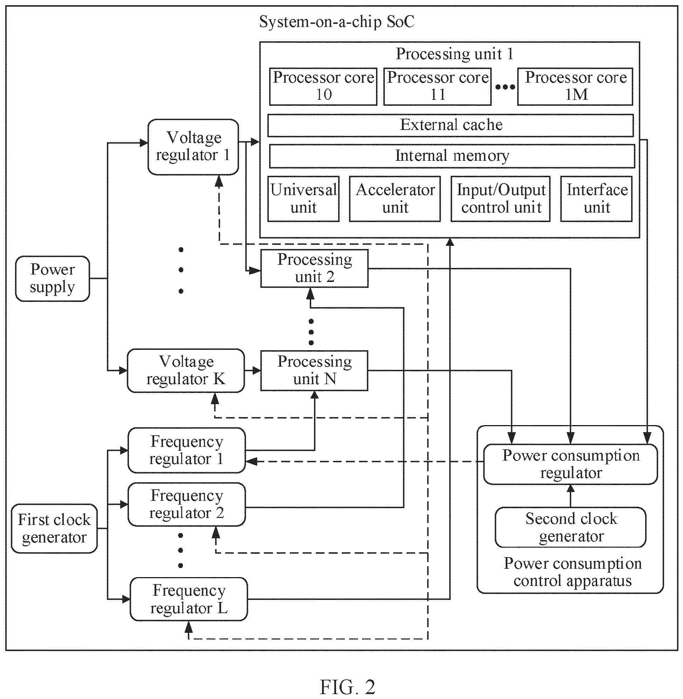

FIG. 2 is an example of a schematic diagram of a system architecture to which an embodiment of this application is applicable. As shown in FIG. 2, the system architecture may include at least one processing unit, for example, a processing unit 1, a processing unit 2, ..., a processing unit N, where N is a positive integer. Each of the at least one processing unit may be any processing unit described in the foregoing content, for example, a CPU, a GPU, an NPU, an AP, an ISP, a DSP, a modem processor, a video codec, or a baseband processor. The at least one processing unit may be integrated into one chip (namely, a SoC) shown in FIG. 2, or may be separately deployed on different chips, or may be distributedly deployed on a plurality of chips in a form of any combination. In addition, although not shown in FIG. 2, the at least one processing unit may further implement communication through interconnection or a bus.

In embodiments of this application, each processing unit may include a plurality of components. For example, the processing unit 1 is used as an example for description. Still refer to FIG. 2. The processing unit 1 may include at least one processor core, such as a processor core 10, a processor core 11, ..., a processor core 1M, where M is a positive integer. The processing unit 1 may be of a homogeneous type, to be specific, structures and functions of the processor core 10 to the processor core 1M are the same, and the processor core 10 to the processor core 1M may complete a same processing task by same processing logic. Alternatively, the processing unit 1 may be of a heterogeneous type, to be specific, structures and functions of the processor core 10 to the processor core 1M are different. The processor core 10 to the processor core 1M are respectively responsible for different parts of a same processing task, or are respectively responsible for different processing tasks. In addition, the processing unit 1 may further include a non-core component, for example, a general-purpose unit (including a counter, a decoder, a signal generator, and the like), an accelerator unit, an input/output control unit, an interface unit, an internal memory, and an external cache. The processor cores and the non-core component may be further connected through a bus, to implement a data transmission operation between any two components.

As shown in FIG. 2, the system architecture may further include a power supply and at least one voltage regulator, such as a voltage regulator 1, a voltage regulator 2, ..., and a voltage regulator K, where K is a positive integer. The power supply may be coupled to each processing unit via the at least one voltage regulator. For example, the power supply may be coupled to one processing unit via one voltage regulator (for example, coupled to the processing unit N via the voltage regulator K). In this case, the processing unit is independently located in a voltage domain. Alternatively, the power supply may be coupled to two or more processing units via one voltage regulator (for example, coupled to the processing unit 1 and the processing unit 2 via the voltage regulator 1). In this case, at least two processing units are in a same voltage domain, and the at least two processing units have a same operating voltage. The voltage regulator may be any component that can implement a voltage regulation function, for example, a Buck circuit, a switched capacitor (SC) circuit, or a low dropout regulator (low dropout regulator, LDO).

As shown in FIG. 2, the system architecture may further include a first clock generator and at least one frequency regulator, for example, a frequency regulator 1, a frequency regulator 2, ..., a frequency regulator L, where L is a positive integer. The first clock generator is configured to generate a first clock signal. The first clock signal has preset frequency, for example, 38.4 MHz. The first clock generator may be coupled to each processing unit via the at least one frequency regulator. For example, the first clock generator may be coupled to one processing unit via one frequency regulator (for example, coupled to the processing unit N via the frequency regulator 1, coupled to the processing unit 2 via the frequency regulator 2, and coupled to the processing unit 1 via the frequency regulator L). In this case, the processing unit may correspond to one piece of clock frequency. Alternatively, the first clock generator may be coupled to two or more processing units via one frequency regulator. In this case, the at least two processing units may correspond to same clock frequency. The frequency regulator may be any device that can implement a frequency regulation function, for example, a clock gating circuit, a clock extension circuit, a frequency divider, or a frequency multiplier. It should be understood that "operating clocks of the N processing units are provided by the same first clock generator" is only an optional implementation. In another optional implementation, the operating clocks of the N processing units may be provided by N clock generators, or operating clocks of some of the N processing units are provided by the same clock generator, and operating clocks of the other processing units are provided by different clock generators. This is not specifically limited.

For example, a voltage regulator and a frequency regulator corresponding to one processing unit may be further deployed on a chip on which the processing unit is located. In this case, the voltage regulator corresponding to the processing unit may also be referred to as an on-chip voltage regulator, for example, an on-chip Buck circuit, an on-chip SC circuit, or an on-chip low dropout regulator (on-chip low dropout regulator, OCLDO). The frequency regulator corresponding to the processing unit may also be referred to as an on-chip frequency regulator, such as an on-chip clock extension circuit, an on-chip frequency divider, or an on-chip frequency multiplier.

Still refer to FIG. 2. In this embodiment of this application, a power consumption control apparatus may be further disposed in the system architecture. The power consumption control apparatus may be deployed on the SoC in the processor shown in FIG. 2, or certainly may be deployed outside the SoC, for example, used as an independent component in the processor. The power consumption control apparatus may include a second clock generator and a power consumption regulator. A clock output end of the second clock generator may be connected to a clock control end of the power consumption regulator. The second clock generator is also referred to as a constant-frequency clock generator, and is configured to generate a constant-frequency clock signal and provide the clock signal for the power consumption regulator. An input end of the power consumption regulator may be separately connected to one or more processing units of the at least one processing unit, and is configured to obtain, by an operating clock of the constant-frequency clock signal, power consumption caused by the one or more processing units in a period of time, and regulate current power consumption of the one or more processing units based on the power consumption, to avoid a phenomenon such as overcurrent of the one or more processing units and achieve an objective of protecting the processing units.

In an optional implementation, regulating power consumption of a processing unit may be implemented by regulating an operating voltage and/or an operating clock of the processing unit. In this case, still refer to FIG. 2. An output end of the power consumption regulator may be further separately connected to each voltage regulator and each frequency regulator in the system architecture. When power consumption of the one or more processing units needs to be regulated, the power consumption regulator may send a regulation instruction to a voltage regulator and/or a frequency regulator corresponding to the one or more processing units. For example, when the power consumption needs to be reduced, a voltage reduction regulation instruction is sent to the corresponding voltage regulator, and/or a frequency reduction regulation instruction is sent to the corresponding frequency regulator. For another example, when the power consumption needs to be increased, a voltage increase regulation instruction is sent to the corresponding voltage regulator, and/or a frequency increase regulation instruction is sent to the corresponding frequency regulator. In this implementation, when the voltage regulator and the frequency regulator that correspond to a processing unit and the processing unit are located on the same SoC, the SoC does not need to be skipped to perform off-chip regulation, but regulation may be directly performed in the SoC, so that a regulation instruction can be transferred to the corresponding voltage regulator and frequency regulator more quickly, thereby helping improve a speed of power consumption regulation. In addition, a voltage regulator and a frequency regulator that correspond to a processing unit are local regulators of the processing unit. Regulating power consumption of the processing unit via the local regulators does not affect normal operation of the SoC and even other components on the processor. Further, the operating voltage and the operating clock of each processing unit are generally provided by a power management module (such as the power management module shown in FIG. 1). In this implementation, the operating voltage and the operating clock of the processing unit are regulated in a timely manner, and this further helps ensure that the operating voltage or the operating clock does not exceed a threshold of the power management module, thereby achieving an objective of protecting the processing unit and the power management module.

In embodiments of this application, there may be a plurality of cases for the one or more processing units, and examples are as follows.

Case 1: The one or more processing units refer to each processing unit. In this case, the power consumption regulator can reduce current power consumption of any processing unit in a timely manner when power consumption caused by the processing unit is excessively high. This manner helps ensure that a phenomenon such as overcurrent does not occur on each processing unit.

Case 2: The one or more processing units refer to processing units in a same voltage domain. In this case, because the processing units in the same voltage domain correspond to a same voltage regulator, the power consumption regulator can regulate these processing units together by regulating the voltage regulator.

Case 3: The one or more processing units refer to processing units that operate at same clock frequency. In this case, because the processing units that operate at the same clock frequency correspond to a same frequency regulator, the power consumption regulator can regulate these processing units together by regulating the frequency regulator.

Case 4: The one or more processing units refer to all processing units deployed on the SoC. In this case, when overall power consumption of the SoC is excessively high, the power consumption regulator can regulate the processing units on the SoC together, to implement SoC-level power consumption monitoring and power consumption regulation.

Case 5: A plurality of processing units are preconfigured in a software manner, or a plurality of processing units are combined according to a rule. In this case, the power consumption regulator further supports configuring a to-be-regulated processing unit based on an actual requirement, and this helps improve user experience.

It should be noted that the foregoing content of "providing an operating clock for the power consumption regulator by setting a constant-frequency clock generator" is only an optional implementation. In another optional implementation, the power consumption control apparatus may not include a constant-frequency clock generator, but includes a new frequency regulator (for example, a frequency regulator L+1). An input end of the frequency regulator is connected to the first clock generator, an output end of the frequency regulator is connected to the clock control end of the power consumption regulator, and the frequency regulator may receive the first clock signal output by the first clock generator, and then perform frequency regulation on the first clock signal, to obtain the constant-frequency clock signal and provide the constant-frequency clock signal for the power consumption regulator. In this implementation, there is no need to separately dispose a clock generator for the power consumption regulator, but an original clock generator may be directly used to generate the dedicated constant-frequency clock signal corresponding to the power consumption regulator. Therefore, normal operation of the power consumption regulator can be implemented with lower costs.

The following describes a specific implementation process of the power consumption control solution in this application with reference to specific embodiments.

### Embodiment 1

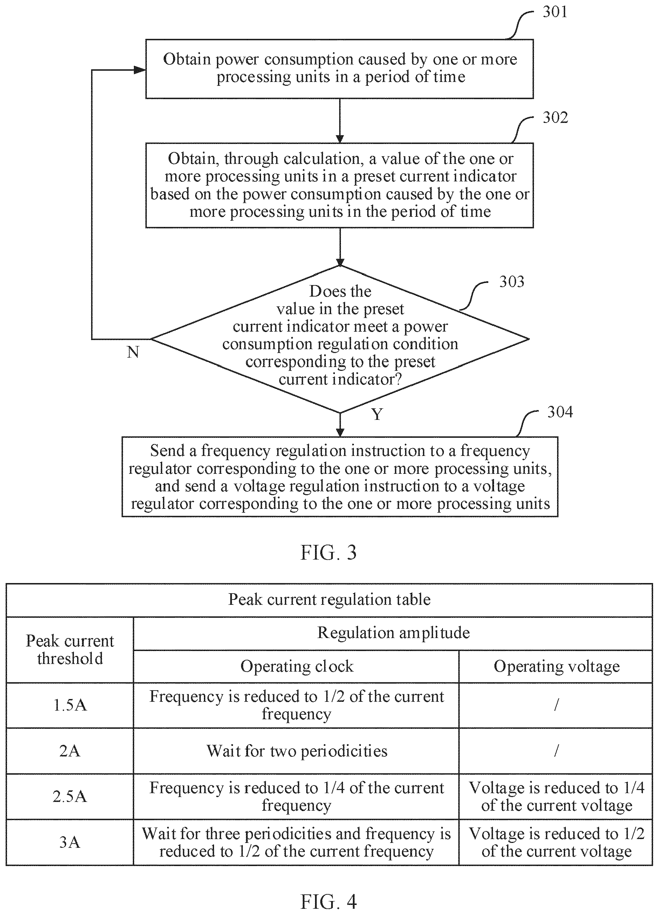

FIG. 3 shows an example of a power consumption regulation method according to an embodiment of this application. The method is applicable to a power consumption regulator, for example, the power consumption regulator shown in FIG. 2. In this embodiment of this application, the power consumption regulator may perform the power consumption regulation method in a periodicity manner. FIG. 3 describes an example of a power consumption regulation process of the power consumption regulator. As shown in FIG. 3, the method includes the following steps.

Step 301: The power consumption regulator obtains power consumption caused by one or more processing units in a period of time.

In the foregoing step 301, when the power consumption regulator executes the power consumption regulation method in the periodicity manner, the period of time may be a periodicity time period. For each of the one or more processing units, the power consumption regulator may obtain, in a plurality of manners, power consumption caused by the processing unit in the periodicity time period. The following describes several possible obtaining manners by using examples.

In a possible obtaining manner, a power consumption control apparatus maintains power consumption caused by the processing unit in each instantaneous time period (where a time interval of the instantaneous time period is very short). When each periodicity time period ends, the power consumption regulator may obtain power consumption caused by the processing unit in instantaneous time periods of the periodicity time period from the power consumption control apparatus and store the power consumption, and accumulate the power consumption caused in the instantaneous time periods to obtain total power consumption caused by the processing unit in the periodicity time period.

In another possible obtaining manner, a power consumption control apparatus maintains a power consumption value, of the processing unit, corresponding to each moment, and the power consumption value, of the processing unit, corresponding to each moment is total power consumption caused from a moment when the processing unit starts running to the moment. In this way, when each periodicity time period ends, the power consumption regulator may obtain, from the power consumption control apparatus, a power consumption value, of the processing unit, corresponding to an end moment of the periodicity time period and a power consumption value corresponding to an end moment of a previous periodicity time period, and subtract the two, to obtain total power consumption caused by the processing unit in the periodicity time period.

In still another possible obtaining manner, the power consumption control apparatus maintains a power consumption value, of the processing unit, corresponding to a present moment of each periodicity. At a start moment of a periodicity time period, the power consumption control apparatus may record a power consumption value of the processing unit at a present moment of the periodicity time period as 0, then obtain, in real time, power consumption caused by the processing unit in each instantaneous time period, and accumulate the power consumption in the power consumption value corresponding to the present moment, to update, in real time, the power consumption value corresponding to the present moment. In this way, when the periodicity time period ends, the power consumption regulator may obtain, from the power consumption control apparatus, the power consumption value, of the processing unit, corresponding to the present moment, where the power consumption value is total power consumption caused by the processing unit in the periodicity time period.

How the power consumption control apparatus maintains the power consumption of the processing unit is specifically described in Embodiment 2, and is not described herein first.

Step 302: The power consumption regulator obtains, through calculation, a value of the one or more processing units in a preset current indicator based on the power consumption caused by the one or more processing units in the period of time.

In the foregoing step 302, the preset current indicator may include a peak current indicator and/or a current change rate indicator. The following uses one processing unit as an example.

When the preset current indicator includes the peak current indicator, the power consumption regulator may obtain, through calculation, a peak current of the processing unit in the period of time based on the power consumption caused by the processing unit in the period of time and a voltage of the processing unit in the period of time. For example, when a time interval of the period of time is relatively small, the power consumption regulator may directly use a ratio of the power consumption caused by the processing unit in the period of time to the voltage of the processing unit in the period of time as the peak current of the processing unit in the period of time. When a time interval of the period of time is relatively large, the power consumption regulator may first divide the period of time into a plurality of instantaneous time periods with a relatively small time interval, then obtain an instantaneous current of the processing unit in each instantaneous time period through calculation based on the power consumption caused by the processing unit in each instantaneous time period and a voltage of the processing unit in each instantaneous time period, and then use a largest instantaneous current of a plurality of instantaneous currents corresponding to a plurality of instantaneous time periods as the peak current of the processing unit in the period of time. To accurately learn of an instantaneous current status of the processing unit, a time interval of the period of time may be set to 0.5 ms. In this way, the power consumption regulator may collect statistics on a peak current at a very small time interval, to help the power consumption regulator regulate power consumption in real time based on the peak current.

When the preset current indicator includes the current change rate indicator, the power consumption regulator may further obtain power consumption caused by the processing unit in a latest period of historical time before the period of time, then first obtain an average current of the processing unit in the period of time through calculation based on the power consumption caused by the processing unit in the period of time and a voltage of the processing unit in the period of time, obtain a historical average current of the processing unit in the latest period of historical time through calculation based on the power consumption caused by the processing unit in the latest period of historical time and a voltage of the processing unit in the latest period of historical time, then calculate a current difference between the average current of the processing unit in the period of time and the average current of the processing unit in the latest period of historical time, and obtain a current change rate through calculation based on the current difference and a time interval between the period of time and the latest period of historical time. It should be noted that calculating the current change rate in this manner is only an optional implementation. In another optional implementation, the power consumption regulator may further first calculate a power consumption difference between the power consumption caused by the processing unit in the period of time and the historical power consumption caused by the processing unit in the latest period of historical time, then calculate a voltage difference between the voltage of the processing unit in the period of time and the historical voltage of the processing unit in the latest period of historical time, then obtain the current difference through calculation based on the power consumption difference and the voltage difference, and obtain the current change rate through calculation based on the current difference and the time interval between the period of time and the latest period of historical time. There are many optional implementations, and details are not described herein again.

In this embodiment of this application, when the preset current indicator includes both the peak current indicator and the current change rate indicator, the peak current indicator and the current change rate indicator may correspond to same periodicity duration, or may correspond to different periodicity duration. When the peak current indicator and the current change rate indicator correspond to different periodicity duration, the power consumption regulator may perform peak current-based power consumption monitoring based on the periodicity duration corresponding to the peak current indicator, perform current change rate-based power consumption monitoring based on the periodicity duration corresponding to the current change rate indicator, and then perform power consumption control by using a worst power consumption situation obtained through the two power consumption monitoring, to prevent an overcurrent phenomenon as much as possible.

It should be noted that the foregoing content is described only by using an example in which the power consumption regulator monitors a preset current indicator of one processing unit. When the power consumption regulator monitors preset current indicators (for example, peak current indicators) of a plurality of processing units, the processing unit in the foregoing content may be directly replaced with the plurality of processing units to perform calculation. For example, average power consumption may be first obtained through calculation based on total power consumption caused by the plurality of processing units in a period of time and a quantity of the plurality of processing units, then an average voltage of the plurality of processing units in the period of time is obtained through calculation based on a plurality of voltages of the plurality of processing units in the period of time and the quantity of the plurality of processing units, and then an average current is obtained, through calculation based on the average power consumption and the average voltage, as a peak current of the plurality of processing units in the period of time. Alternatively, a peak current of each processing unit in a period of time may be first obtained through calculation in the foregoing manner, and then an average value of a plurality of peak currents of the plurality of processing units in the period of time is used as a peak current of the plurality of processing units in the period of time. There are many possible implementations, and details are not described herein.

Step 303: The power consumption regulator determines whether the value of the one or more processing units in the preset current indicator meets a power consumption regulation condition corresponding to the preset current indicator; and if the value meets the condition, performs step 304, or if the value does not meet the condition, performs step 301.

In the foregoing step 303, when the preset current indicator includes the peak current indicator, when an operating voltage remains unchanged, a larger peak current of the processing unit indicates larger power consumption of the processing unit; and when an operating clock remains unchanged, a larger peak current of the processing unit indicates higher work performed by the processing unit in unit time and more heat generated by the processing unit. Both of the two cases may cause a phenomenon such as overcurrent or a temperature rise in the processing unit, and adversely affect the processing unit or even another component disposed on a SoC. On this basis, to avoid an excessively large peak current as much as possible, in an optional implementation, a power consumption regulation condition corresponding to the peak current may be set as follows: The peak current is greater than a peak current threshold. The peak current threshold may be determined based on an experiment, or may be set by a person skilled in the art based on experience. For example, the peak current threshold may be set to a rated maximum operating current or a value slightly greater than the rated maximum operating current, and this is not specifically limited.

In the foregoing step 303, when the preset current indicator includes the current change rate indicator, when the operating voltage remains unchanged, a larger absolute value of the current change rate of the processing unit indicates a larger power consumption change amplitude of the processing unit; and when the operating clock remains unchanged, a larger absolute value of the current change rate of the processing unit indicates a larger work change amplitude of the processing unit in unit time, and a temperature of the processing unit occasionally decreases or increases. In both cases, the processing unit is in an unstable state, and not only the processing unit cannot operate stably, but also operating stability of even another related component on the SoC may be affected. On this basis, to avoid current instability as much as possible, in an optional implementation, a power consumption regulation condition corresponding to the current change rate may be set as follows: An absolute value of the current change rate is greater than a current change rate threshold. The current change rate threshold may include a first current change rate threshold and a second current change rate threshold. The first current change rate threshold corresponds to a case in which a current increases, that is, the first current change rate threshold is a positive value, and the second current change rate threshold corresponds to a case in which a current decreases, that is, the second current change rate threshold is a negative value. In this case, that an absolute value of the current change rate is greater than a current change rate threshold may include: The current change rate is greater than the first current change rate, or the current change rate is less than the second current change rate. The first current change rate threshold and the second current change rate threshold may be determined based on an experiment, or may be set by a person skilled in the art based on experience. This is not specifically limited.

Step 304: The power consumption regulator sends a frequency regulation instruction to a frequency regulator corresponding to the one or more processing units, and sends a voltage regulation instruction to a voltage regulator corresponding to the one or more processing units.

In an optional implementation, when the peak current is greater than the peak current threshold, it indicates that a present current of the one or more processing units is excessively high. To avoid a phenomenon such as overcurrent or overheating of the one or more processing units, current power consumption of the one or more processing units needs to be reduced. When the current change rate is greater than the first current change rate threshold, it indicates that the present current of the one or more processing units rises too fast. To avoid a phenomenon that the one or more processing units are in an unstable state, the current power consumption of the one or more processing units also needs to be reduced. When the current power consumption of the one or more processing units is reduced, the power consumption regulator may generate a frequency reduction regulation instruction and send the instruction to a frequency controller corresponding to the one or more processing units. After receiving the frequency reduction regulation instruction, a frequency regulator corresponding to any processing unit may reduce frequency of an operating clock corresponding to the processing unit, or provide an operating clock for the processing unit after several periodicities, to reduce power consumption of the processing unit by regulating the operating clock of the processing unit. The processing unit may be in a high-voltage and low-frequency state after frequency reduction, and this causes low electric energy utilization of the processing unit. Therefore, when the current power consumption of the one or more processing units needs to be reduced, the power consumption regulator may further synchronously send a voltage reduction regulation instruction to the voltage regulator corresponding to the processing unit, to reduce the operating voltage of the processing unit. In this manner, the processing unit can be in a low-voltage and low-frequency state as much as possible, and this helps improve electric energy utilization of the processing unit.

In an optional implementation, when the current change rate is less than the second current change rate threshold, it indicates that the present current of the one or more processing units decreases too fast. To avoid a phenomenon that the one or more processing units are in an unstable state, the current power consumption of the one or more processing units needs to be increased. When the peak current of the processing unit is excessively low, the power consumption of the processing unit is relatively low, and a relatively large power consumption margin in the processing unit may not be used, causing relatively low processing efficiency of the processing unit. In this case, to improve processing efficiency of the processing unit, the current power consumption of one or more processing units may also be increased. When the current power consumption of the one or more processing units is increased, the power consumption regulator may send a frequency increase regulation instruction to the frequency regulator corresponding to the one or more processing units. After receiving the frequency increase regulation instruction, the frequency regulator corresponding to any processing unit may increase the frequency of the operating clock corresponding to the processing unit, or provide the operating clock for the processing unit in advance before an original periodicity moment is reached. In addition, a high-frequency state of the processing unit needs to be driven by a high voltage. Therefore, the power consumption regulator may further send a voltage increase control instruction to the voltage regulator corresponding to the processing unit at the same time to increase the operating voltage of the processing unit, to smoothly increase the operating clock of the processing unit.

In an optional implementation of step 303 and step 304, the preset current indicator may correspond to a plurality of regulation thresholds, for example, four or more regulation thresholds. The plurality of regulation thresholds respectively correspond to a plurality of regulation amplitudes, and the regulation amplitudes may include one or more of a frequency reduction multiple corresponding to the operating clock, a quantity of periodicities that the operating clock waits for, a voltage reduction multiple corresponding to the operating voltage, a frequency increase multiple corresponding to the operating clock, a quantity of periodicities that are advanced for the operating clock, and a voltage increase multiple corresponding to the operating voltage, and software update is supported. In this case, after obtaining the value of the one or more processing units in the preset current indicator through calculation, the power consumption regulator may separately compare the value with the plurality of regulation thresholds, to find alternative regulation thresholds whose absolute values are less than the value from the plurality of regulation thresholds. Then, the power consumption regulator may use, as a target regulation threshold, an alternative regulation threshold with a largest absolute value in the alternative regulation thresholds, and use a regulation amplitude corresponding to the target regulation threshold to regulate an operating clock and/or an operating voltage corresponding to the one or more processing units. The software may update the regulation threshold and the regulation amplitude in a plurality of manners. For example, the power consumption regulator may be connected to an external device in a wireless manner, so that the power consumption regulator supports receiving, in a wireless manner, the target regulation threshold and the target regulation amplitude that are to be updated and updating the target regulation threshold and the target regulation amplitude. For another example, a preset update interface may be provided on the power consumption regulator, and the preset update interface and an external device are connected through a peripheral bus when update is required, so that the power consumption regulator supports receiving, in a wired manner, the target regulation threshold and the target regulation amplitude that are to be updated and updating the target regulation threshold and the target regulation amplitude.

The following provides example descriptions from a perspective of monitoring the peak current and a perspective of monitoring the current change rate.

### Peak current

FIG. 4 is an example of a schematic diagram of a peak current regulation table according to an embodiment of this application. As shown in FIG. 4, as a peak current threshold increases, a regulation amplitude corresponding to the peak current threshold gradually increases. For example, when the peak current is not greater than 2.5A, a power consumption regulator can effectively reduce power consumption by regulating only an operating clock. However, when the peak current is greater than 2.5A, a power consumption regulator regulates only an operating clock and cannot reduce power consumption in a timely manner. Therefore, the power consumption regulator further needs to regulate both the operating clock and an operating voltage. A in FIG. 4 refers to a current unit, that is, ampere.

Based on the peak current regulation table shown in FIG. 4 and the system architecture shown in FIG. 2, it is assumed that the power consumption regulator calculates that a peak current of a processing unit N in one periodicity is 1.7A, and the power consumption regulator may compare the peak current 1.7A with four peak current thresholds shown in FIG. 4. Because the peak current 1.7A is only greater than a peak current threshold 1. 5A, the peak current 1.7A triggers a regulation amplitude corresponding to the peak current threshold 1.5A. In this case, the power consumption regulator may immediately regulate, based on the regulation amplitude corresponding to the peak current threshold 1.5A, an operating clock corresponding to the processing unit N, in other words, control a frequency regulator 1 to reduce operating clock frequency of the processing unit N to half of the present operating clock frequency.

Theoretically, after frequency reduction and voltage reduction operations are performed, if another circuit environment in the processing unit N remains unchanged, a peak current of the processing unit N also decreases accordingly. When the peak current falls below the peak current threshold 1.5A, the power consumption regulator may end frequency reduction. However, considering that if frequency reduction is directly ended when the peak current just falls below the peak current threshold 1. 5A, it is very likely that a peak current of the processing unit at a next moment rises above the peak current threshold 1.5A again, or fluctuates around the peak current threshold 1.5A. Consequently, the power consumption regulator needs to perform the frequency reduction operation again, and this wastes network resources and computing resources. To avoid this situation, when the peak current just falls below the peak current threshold 1.5 A, the power consumption regulator may not directly end frequency reduction, but continue to reduce frequency for a period of time, and observe whether a phenomenon that the peak current rises above the peak current threshold 1.5A again occurs. If this phenomenon does not occur in the period of time, the power consumption regulator may end frequency reduction. Alternatively, another threshold may be set in the power consumption regulator. The threshold is slightly less than the minimum peak current threshold 1.5A. For example, the threshold is 1.4A. When the peak current falls below the peak current threshold 1.5A, the power consumption regulator may enable the threshold 1.4A to compare with the peak current. As long as the peak current does not fall below 1.4A, the power consumption regulator may not end frequency reduction. When the peak current falls below 1.4A, the power consumption regulator may end frequency reduction. In this implementation, quitting is delayed to prevent the power consumption regulator from repeatedly performing frequency reduction, and this helps save computing resources and network resources.

It should be noted that, the foregoing content uses the minimum peak current threshold as merely an example to describe this solution of delaying quitting. It should be understood that this solution of delaying quitting may also be applied to any other peak current threshold. For any other peak current threshold, quitting frequency reduction (and/or voltage reduction) means quitting a regulation amplitude corresponding to the present peak current threshold, and switching to a regulation amplitude corresponding to a lower-level peak current threshold. In this case, if quitting is delayed in a manner of setting another threshold, the another set threshold may be set to a value that is slightly less than the present peak current threshold and greater than the lower-level peak current threshold.

In a special case, after the frequency reduction operation is performed, if the peak current of the processing unit N continues to increase for some special reasons, a peak current of the processing unit in a subsequent periodicity time period may be further greater than another peak current threshold. However, because the peak current is a continuous variable, the peak current is continuously changed, but not suddenly changed. Therefore, as long as periodicity duration is set to a sufficiently small value, a peak current subsequently detected by the power consumption regulator may be first compared with a peak current threshold 2A and then be compared with a peak current threshold 2.5A. Therefore, a case in which the peak current is greater than the peak current threshold 2.5A or greater than a peak current threshold 3A is not directly detected before a case in which the peak current is greater than the peak current threshold 2A is detected first. In this way, multi-level peak current thresholds are set, so that peak current thresholds that the peak current is greater than are sequentially detected by the power consumption regulator in ascending order. Therefore, the power consumption regulator can also gradually reduce power consumption in ascending order of regulation amplitudes, instead of directly reducing the power consumption to a very small value.

### Current change rate

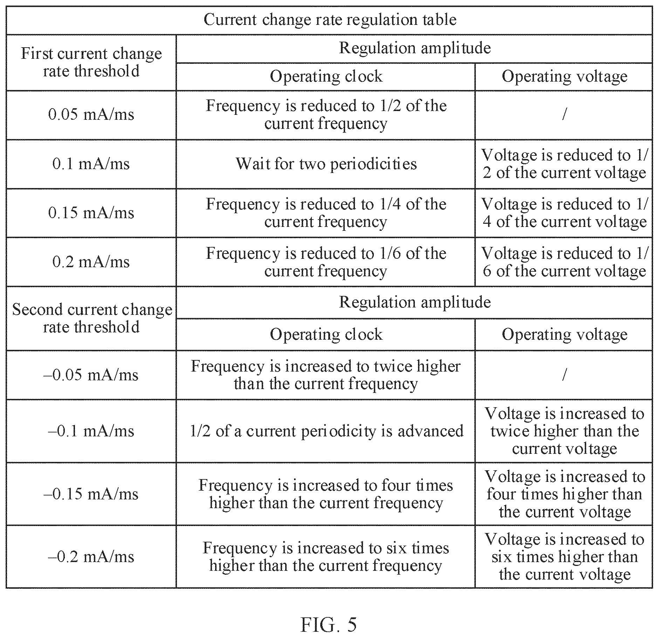

FIG. 5 is an example of a schematic diagram of a current change rate regulation table according to an embodiment of this application. As shown in FIG. 5, a current change rate threshold may include a first current change rate threshold and a second current change rate threshold, the first current change rate threshold is correspondingly a positive value, and the second current change rate threshold is correspondingly a negative value. As an absolute value of the current change rate threshold increases, a regulation amplitude corresponding to the current change rate threshold gradually increases. For example, as the first current change rate threshold increases, a frequency reduction amplitude or a voltage reduction amplitude corresponding to the first current change rate threshold gradually increases; and as the second current change rate threshold decreases, a frequency increase amplitude or a voltage increase amplitude corresponding to the second current change rate threshold gradually increases. mA in FIG. 5 is a current unit, that is, milliampere. ms in FIG. 5 is a time unit, that is, millisecond.

Based on the current change rate regulation table shown in FIG. 5 and the system architecture shown in FIG. 2, assuming that the power consumption regulator calculates that current change rates of a processing unit 1 and a processing unit 2 in one periodicity are 0.12 mA/ms, the power consumption regulator may compare the current change rate 0.12 mA/ms with four positive first current change rate thresholds shown in FIG. 5. Because the current change rate 0.12 mA/ms is greater than both a first current change rate threshold 0.05 mA/ms and a first current change rate threshold 0.1 mA/ms, the current change rate 0.12 mA/ms triggers a regulation amplitude corresponding to the higher first current change rate threshold 0.1 mA/ms. In this case, the power consumption regulator may immediately regulate an operating clock of the processing unit 1, an operating clock of the processing unit 2, and operating voltages of the processing unit 1 and the processing unit 2 based on the regulation amplitude corresponding to the first current change rate threshold 0.1 mA/ms, in other words, control a frequency regulator L to wait for three periodicities before providing the operating clock for the processing unit 1, control a frequency regulator 2 to wait for three periodicities before providing the operating clock for the processing unit 2, and control a voltage regulator 1 to reduce the operating voltages of the processing unit 1 and the processing unit 2 to half of the present operating voltage.

In theory, after frequency reduction and voltage reduction are performed, if other circuit environments of the processing unit 1 and the processing unit 2 remain unchanged, the current change rates of the processing unit 1 and the processing unit 2 also decrease accordingly. When the current change rate falls below the first current change rate threshold 0.1 mA/ms, as long as the present current change rate is higher than the previous-level first current change rate threshold 0.05 mA/ms, the power consumption regulator may switch to a regulation amplitude corresponding to the previous-level first current change rate threshold 0.05 mA/ms (in other words, control the frequency regulator L to reduce operating clock frequency of the processing unit 1 to half of the present operating clock frequency, and control the frequency regulator 2 to reduce operating clock frequency of the processing unit 2 to half of the present operating clock frequency). However, considering that if switching to the regulation amplitude corresponding to the first current change rate threshold 0.05 mA/ms is directly performed when the current change rate just falls below the first current change rate threshold 0.1 mA/ms, it is very likely that a current change rate of the processing unit at a next moment rises above the first current change rate threshold 0.1 mA/ms, or fluctuates around the first current change rate threshold 0.1 mA/ms. Consequently, the power consumption regulator needs to switch back to the regulation amplitude corresponding to the first current change rate threshold 0.1 mA/ms, and network resources and computing resources are wasted. To avoid this case, when the current change rate just falls below the first current change rate threshold 0.1 mA/ms, the power consumption regulator may not directly perform switching on the regulation amplitude, but continue to perform regulation for a period of time by using the existing regulation amplitude, and observe whether a phenomenon that the current change rate rises above the first current change rate threshold 0.1 mA/ms occurs. If this phenomenon does not occur in the period of time, the power consumption regulator may switch to the regulation amplitude corresponding to the first current change rate threshold 0.05 mA/ms. Alternatively, another threshold may be set in the power consumption regulator. The threshold is slightly less than the first current change rate threshold 0.1 mA/ms and is greater than the first current change rate threshold 0.05 mA/ms. For example, the threshold is 0.09 mA/ms. When the current change rate falls below the first current change rate threshold 0.1 mA/ms, the power consumption regulator may enable the threshold 0.09 mA/ms to compare with the current change rate. As long as the current change rate does not fall below 0.09 mA/ms, the power consumption regulator may not perform switching on the regulation amplitude. When the current change rate falls below 0.09 mA/ms, the power consumption regulator performs switching on the regulation amplitude. In this implementation, quitting is delayed to prevent the power consumption regulator from repeatedly switching on the regulation amplitude, and this helps save computing resources and network resources.

It should be noted that the foregoing content describes this solution of delaying quitting by using merely an example in which a current change rate threshold at a middle level is triggered. It should be understood that this solution of delaying quitting may be further applied to any other first current change rate threshold, for example, the minimum first current change rate threshold 0.05 mA/ms. For the minimum first current change rate threshold 0.05 mA/ms, because a previous-level current change rate threshold does not exist, performing switching on a regulation amplitude refers to quitting frequency reduction and voltage reduction. If quitting is delayed in a manner of setting another threshold, the another set threshold may be set to a value that is slightly less than the minimum first current change rate threshold 0.05 mA/ms.

In a special case, after frequency reduction and voltage reduction operations are performed, if a current change rate of a processing unit N continues to increase for some special reasons, the current change rate of the processing unit in a subsequent periodicity time period may be further greater than another first current change rate threshold. However, because the current change rate is a continuous variable, the current change rate is continuously changed, but not suddenly changed. Therefore, as long as periodicity duration is set to a sufficiently small value, a current change rate subsequently detected by the power consumption regulator may be first compared with a first current change rate threshold 0.15 mA/ms and then be compared with a first current change rate threshold 0.2 mA/ms. Therefore, a case in which the current change rate is greater than the first current change rate threshold 0.2 mA/ms or greater than a first current change rate threshold 0.25 mA/ms is not directly detected before a case in which the current change rate is greater than the first current change rate threshold 0.15 mA/ms is detected first. In this way, multi-level first current change rate thresholds are set, so that first current change rate thresholds that the current change rate is greater than are sequentially detected by the power consumption regulator in ascending order. Therefore, the power consumption regulator can also gradually reduce power consumption in ascending order of regulation amplitudes, instead of directly reducing the power consumption to a very small value.

It should be noted that for a solution of increasing power consumption based on regulation amplitudes corresponding to multi-level second current change rate thresholds, refer to the foregoing solution of reducing power consumption based on the regulation amplitudes corresponding to the multi-level first current change rate thresholds. Details are not described herein again.

In an optional implementation, when the preset current indicator includes both the peak current indicator and the current change rate indicator, if a regulation amplitude obtained by monitoring the peak current is different from a regulation amplitude obtained by monitoring the current change rate, the power consumption may be regulated based on a larger regulation amplitude. A larger regulation amplitude can better reflect a worse circuit environment than a smaller regulation amplitude. Therefore, this manner is actually equivalent to regulating an entire circuit environment based on a regulation amplitude corresponding to the worse circuit environment, and this helps prevent deterioration of the entire circuit environment in advance.

In the foregoing content, that one processing unit is located in one voltage domain means that all components in the processing unit have a same operating voltage, and that one processing unit has one operating clock means that all components in the processing unit operate by the same operating clock. In this case, the foregoing power consumption control solution is actually regulating the power consumption of the one or more processing units by using a processing unit as a granularity. However, in another optional implementation, components in one processing unit may also have different operating voltages or operate by different operating clocks. In this case, the power consumption of the one or more components may be regulated by using a component in the processing unit as a granularity with reference to the foregoing power consumption control solution. For example, power consumption of some components in a same voltage domain in a processing unit is regulated, or power consumption of some components that operate at same clock frequency in a processing unit is regulated. These are not described in this application.

The following uses Embodiment 2 as an example to describe a possible structure of a power consumption control apparatus. It should be understood that the power consumption control apparatus is not limited as with only this structure in this application, and any power consumption control apparatus that can implement the power consumption regulation method in Embodiment 1 falls within the protection scope of this application.

### Embodiment 2

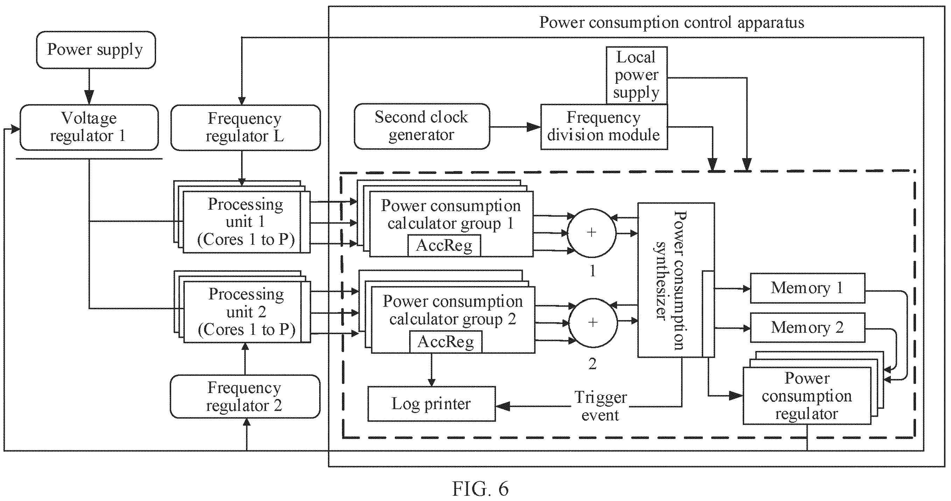

FIG. 6 is an example of a schematic diagram of a structure of a power consumption control apparatus according to an embodiment of this application. As shown in FIG. 6, the power consumption control apparatus may include a second clock generator, one or more groups of power consumption calculators (for example, a power consumption calculator group 1 and a power consumption calculator group 2), one or more power consumption accumulators (for example, ⊕ 1 and ⊕ 2), a power consumption synthesizer, a storage unit (for example, a memory 1 and a memory 2), and a power consumption regulator. The one or more groups of power consumption calculators and the one or more power consumption accumulators are respectively in one-to-one correspondence with one or more processing units. Each group of power consumption calculators may include a plurality of power consumption calculators, and the plurality of power consumption calculators in each group of power consumption calculators are respectively in one-to-one correspondence with processor cores in a processing unit corresponding to the group of power consumption calculators. An input end of any power consumption calculator is connected to an output end of a corresponding processor core, an output end of the any power consumption calculator is connected to an input end of a power consumption accumulator corresponding to a processing unit to which the corresponding processor core belongs, an output end of each power consumption accumulator is connected to an input end of a power consumption statistics collector, an output end of the power consumption statistics collector is separately connected to an input end of a storage unit and a control end of the power consumption regulator, an output end of the storage unit is connected to an input end of a control circuit, and an output end of the control circuit is connected to a frequency regulator (such as a frequency regulator L and a frequency regulator 2) and a voltage regulator (such as a voltage regulator 1) corresponding to the one or more processing units.

For ease of understanding, one or more to-be-regulated processing units are referred to as target processing units below.

According to the power consumption control apparatus shown in FIG. 6, in an optional implementation of performing power consumption regulation,
the any power consumption calculator is configured to: perform power consumption calculation based on a preset instantaneous duration periodicity, collect, in an instantaneous time period corresponding to each instantaneous duration, statistics on power consumption signals triggered by the connected processor core in the instantaneous time period, obtain, at the end of the instantaneous time period through calculation based on a trigger condition of any power consumption signal and corresponding power consumption caused when the power consumption signal is triggered, power consumption corresponding to the power consumption signal, accumulate power consumption corresponding to the power consumption signals to obtain power consumption caused by the connected processor core in the instantaneous time period, and send the power consumption caused by the connected processor core in the instantaneous time period to the connected power consumption accumulator. For example, the power signal is a signal that has a relatively large impact on power consumption caused by the processor core, and includes but is not limited to: a toggle signal corresponding to a component in the processor core, a level signal corresponding to a component in the processor core, a clock gating signal corresponding to a component in the processor core, and a register signal corresponding to a register in the processor core. The toggle signal is used as an example. A power consumption sensor may be further disposed in the processor core, and the power consumption sensor may automatically report to the power consumption calculator when sensing that the toggle signal in the processor core is triggered. Correspondingly, a counter corresponding to the toggle signal may also be set in the power consumption calculator. In an instantaneous time period, each time the power consumption calculator receives a piece of reporting information sent by the power consumption sensor for the toggle signal, the power consumption calculator may control the counter corresponding to the toggle signal to increase by one. When the instantaneous time period ends, the power consumption calculator may obtain a value of the counter corresponding to the toggle signal, and obtain, through calculation by using the value and power consumption corresponding to one triggering of the toggle signal, power consumption caused by the toggle signal in the instantaneous time period. In this manner, the power consumption calculator may obtain power consumption caused by the power consumption signals in the processor core in a same instantaneous time period, and then accumulate the power consumption to obtain power consumption caused by the processor core in the instantaneous time period. In the example, the power consumption of the processor core is obtained through calculation by collecting statistics on key signals that are relatively closely related to the power consumption, so that actual power consumption of the processor core can be obtained through calculation as accurately as possible by using more comprehensive information, and normal functions of these key signals in the processor core are not affected, thereby helping maintain a normal operation of the processor core.

Any power consumption accumulator is configured to: accumulate power consumption that is sent by connected power consumption calculators and that is caused by processor cores in a same processing unit in each instantaneous time period, to obtain power consumption that is caused by the processing unit corresponding to the power consumption accumulator in each instantaneous time period, and send the power consumption to the power consumption synthesizer.

The power consumption synthesizer is configured to: accumulate, in a processing unit dimension and a time dimension, power consumption caused by target processing units in instantaneous time periods of one periodicity, to obtain total power consumption caused by the target processing units in the periodicity and send the total power consumption to a memory, and send a trigger instruction to the power consumption regulator. There are a plurality of accumulation manners. For example, first, power consumption caused by the target processing units in a same instantaneous time period may be accumulated in the processing unit dimension, to obtain power consumption caused by the target processing units in the instantaneous time period, and then the power consumption caused by the target processing units in the instantaneous time periods of the periodicity is accumulated, to obtain the total power consumption caused by the target processing units in the periodicity. For another example, power consumption caused by any target processing unit in the instantaneous time periods of the periodicity may be accumulated first, to obtain power consumption caused by the any target processing unit in the periodicity, and then power consumption caused by the target processing units in the periodicity is accumulated, to obtain the total power consumption caused by the target processing units in the periodicity. It should be noted that the "accumulation" described in this part of content may refer to direct addition, or may refer to weighted averaging. When the "accumulation" refers to weighted averaging, a weight corresponding to each instantaneous time period may gradually decrease as a degree of proximity between the instantaneous time period and a present moment increases, in other words, when the instantaneous time period is closer to the present moment, the weight corresponding to the instantaneous time period is larger.

A storage unit is configured to store power consumption caused by each target processing unit in each periodicity. The storage unit may refer to a memory or a register, such as a single memory, a memory group, a single register, a register group, or a register heap. The memory may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the storage unit of the method described in this specification includes but is not limited to these and any other storage unit of a suitable type.

The power consumption regulator is configured to: after receiving the triggering instruction sent by the power consumption synthesizer, obtain, from the storage unit, power consumption caused by each target processing unit in a latest periodicity, obtain a value of each target processing unit in a preset current indicator through calculation based on the power consumption, and when the value triggers a regulation threshold corresponding to the preset current indicator, separately send, based on a regulation amplitude corresponding to the triggered regulation threshold, a frequency regulation instruction to the frequency regulator corresponding to each target processing unit and a voltage regulation instruction to the voltage regulator corresponding to each target processing unit, to regulate power consumption of each target processing unit. For example, still refer to FIG. 6. The power consumption control apparatus may include a plurality of power consumption regulators. Each of the plurality of power consumption regulators may correspond to one preset current indicator, and is configured to regulate the power consumption of each target processing unit based on the corresponding preset current indicator. Alternatively, each of the plurality of power consumption regulators may correspond to one processing unit, and is configured to regulate power consumption of the corresponding processing unit based on each preset current indicator. Alternatively, each of the plurality of power consumption regulators may correspond to one preset current indicator of one processing unit, and is configured to regulate power consumption of the corresponding processing unit based on the corresponding preset current indicator

In an optional implementation, still refer to FIG. 6. The storage unit may include at least two memories, and the at least two memories are in one-to-one correspondence with at least two preset periodicities. In this case, the power consumption synthesizer may further perform the foregoing power consumption synthesis operation based on the preset periodicity corresponding to each memory, and send, to the memory corresponding to each preset periodicity, power consumption that is caused by each target processing unit in each preset periodicity and that is obtained through synthesis. Each memory may store the power consumption caused by each target processing unit in each preset periodicity corresponding to the memory. In this way, the power consumption regulator may separately obtain, from each memory, the power consumption caused by each target processing unit in each preset periodicity, and perform power consumption regulation on each target processing unit in different time dimensions based on the power consumption caused in each preset periodicity, to further improve fineness of power consumption regulation in the time dimensions. It should be noted that, when at least two time dimensions correspond to different regulation amplitudes, the power consumption regulator may perform power consumption regulation by using a larger regulation amplitude, to cope with a worse circuit environment.

For ease of understanding, the following uses a specific example for description. In this example, it is assumed that the target processing units are a processing unit 1 and a processing unit 2, duration of the instantaneous time period is 0.03 ms, periodicity duration corresponding to the memory 1 is 0.5 ms, periodicity duration corresponding to the memory 2 is 2 ms, and the preset current indicator includes a peak current indicator and a current change rate indicator

In this case, each power consumption calculator in the power consumption calculator group 1 corresponds to one processor core in the processing unit 1, and each power consumption calculator in the power consumption calculator group 2 corresponds to one processor core in the processing unit 2. Each power consumption calculator collects statistics on a quantity of signal toggles, level signal application duration, a quantity of clock gating signal triggering times, and a register read/write variation of each component in a corresponding processor core at an interval of 0.03 ms. Each power consumption calculator obtains, through calculation based on the quantity of signal toggles and power consumption corresponding to one toggle, power consumption corresponding to a toggle signal, obtains, through calculation based on the level signal application duration and power consumption corresponding to level signal application unit duration, power consumption corresponding to a level signal, obtains, through calculation based on the quantity of clock gating signal triggering times and power consumption corresponding to one triggering of a clock gating signal, power consumption corresponding to the clock gating signal, and obtains, through calculation based on the register read/write variation and power consumption corresponding to register read/write unit data amounts, power consumption corresponding to a register signal. Each power consumption calculator accumulates the power consumption corresponding to the toggle signal, the power consumption corresponding to the level signal, the power consumption corresponding to the clock gating signal, and the power consumption corresponding to the register signal, to obtain power consumption caused by the corresponding processor core in the 0.03 ms and report the power consumption to a corresponding power consumption accumulator. For example, each power consumption calculator in the power consumption calculator group 1 sends, to the power consumption accumulator 1 at an interval of 0.03 ms, accumulated power consumption caused by one processor core in the processing unit 1, and each power consumption calculator in the power consumption calculator group 2 sends, to the power consumption accumulator 2 at an interval of 0.03 ms, accumulated power consumption caused by one processor core in the processing unit 2.

The power consumption accumulator 1 accumulates power consumption that is in a same 0.03 ms time interval and that is sent by power consumption calculators in the power consumption calculator group 1, to obtain power consumption caused by the processing unit 1 in the 0.03 ms, and sends the power consumption to the power consumption synthesizer. The power consumption accumulator 2 accumulates, at an interval of 0.03 ms, power consumption that is in a same 0.03 ms time interval and that is sent by power consumption calculators in the power consumption calculator group 2, to obtain power consumption caused by the processing unit 2 in the 0.03 ms, and sends the power consumption to the power consumption synthesizer.

The power consumption synthesizer accumulates, at an interval of 0.5 ms, power consumption sent by the power consumption accumulator 1 and power consumption sent by the power consumption accumulator 2 in the 0.5 ms, to obtain power consumption caused by the processing unit 1 and the processing unit 2 in the 0.5 ms and send the power consumption to the memory 1, and sends a first triggering instruction to the power consumption regulator. In addition, the power consumption synthesizer accumulates, at an interval of 2 ms, power consumption sent by the power consumption accumulator 1 and power consumption sent by the power consumption accumulator 2 in the 2 ms, to obtain power consumption caused by the processing unit 1 and the processing unit 2 in the 2 ms and send the power consumption to the memory 2, and sends a second triggering instruction to the power consumption regulator.

The memory 1 stores power consumption caused by the processing unit 1 and the processing unit 2 in each 0.5 ms, and the memory 2 stores power consumption caused by the processing unit 1 and the processing unit 2 in each 2 ms.

If the power consumption regulator receives the first triggering instruction, the power consumption regulator may obtain, from the memory 1, power consumption caused by the processing unit 1 and the processing unit 2 in the latest 0.5 ms, obtain peak currents of the processing unit 1 and the processing unit 2 in the latest 0.5 ms through calculation based on the power consumption, and compare the peak currents with peak current thresholds shown in FIG. 4, to find a target peak current threshold triggered by the peak currents. The power consumption regulator may further obtain, from the memory 1, power consumption caused by the processing unit 1 and the processing unit 2 in the last two 0.5 ms, obtain a current change rate of the processing unit 1 through calculation based on two pieces of power consumption and a current change rate of the processing unit 2 through calculation based on two pieces of power consumption, and compare the current change rates with current change rate thresholds shown in FIG. 5, to find a target current change rate threshold triggered by the current change rates. Then, the power consumption regulator uses a largest regulation amplitude in the regulation amplitude corresponding to the target peak current threshold and the regulation amplitude corresponding to the target current change rate threshold as a target regulation amplitude, and sends, based on the target regulation amplitude, a frequency regulation instruction to the frequency regulator 2 and the frequency regulator L and a voltage regulation instruction to the voltage regulator 1.

In an optional implementation, still refer to FIG. 6. The power consumption control apparatus may further include a log printer, and the log printer is separately connected to a power consumption calculator and the power consumption synthesizer. The log printer may print, when detecting a trigger event, power consumption caused by any processor core in any instantaneous time period or power consumption caused by any processing unit in one periodicity. The trigger event may be, for example, that power consumption caused by the processor core in a present instantaneous time period is greater than a first alarm threshold, power consumption caused by the processing unit in one periodicity is greater than a second alarm threshold, or a print instruction is received.

In an optional implementation, still refer to FIG. 6. The power consumption control apparatus may further include a frequency dividing module. The frequency dividing module may include a plurality of frequency dividers, and the plurality of frequency dividers respectively correspond to components that are in the power consumption control apparatus. An input end of any frequency divider may be connected to an output end of the second clock generator, and an output end of the any frequency divider may be connected to a clock control end of a corresponding component. The any frequency divider may be configured to perform frequency division on a constant-frequency clock signal generated by the second clock generator into a required clock signal, and provide the required clock signal for the corresponding component. In this implementation, each component in the power consumption control apparatus has a different operating clock, and this helps improve operating flexibility of the power consumption control apparatus. For example, when a load of a component is relatively small, a relatively small operating clock is provided for the component to reduce power consumption; when a load of another component is relatively large, a relatively large operating clock is provided for the another component to improve a processing capability of the another component.

In an optional implementation, still refer to FIG. 6. The power consumption control apparatus may further include a local power supply. The local power supply is connected to components in the power consumption control apparatus, and is configured to supply power to the components in the power consumption control apparatus, to support normal operation of the components. The separate local power supply is disposed for the power consumption control apparatus, so that separate power supplying of the power consumption control apparatus can be implemented, thereby reducing an impact of the power consumption control apparatus on another component in a SoC. It should be understood that although not shown in FIG. 6, the power consumption control apparatus may further include a local voltage regulation module, and the local voltage regulation module may include a plurality of local voltage regulators. The plurality of local voltage regulators respectively correspond to components in the power consumption control apparatus. An input end of any local voltage regulator may be connected to an output end of the local power supply, and an output end of the any local voltage regulator may be connected to a corresponding component. The any local voltage regulator may be configured to reduce an operating voltage provided by the local power supply to a required operating voltage and provide the required operating voltage for the corresponding component. In this implementation, each component in the power consumption control apparatus has a different operating voltage, and this helps further improve operating flexibility of the power consumption control apparatus. For example, when a load of a component is relatively small, a relatively small operating voltage is provided for the component to reduce power consumption; when a load of another component is relatively large, a relatively large operating voltage is provided for the another component to improve a processing capability of the another component.

In an optional implementation, when duration of the instantaneous time period is relatively short, if the power consumption calculator reports power consumption to the power consumption synthesizer in each instantaneous time period, the power consumption synthesizer may need to frequently perform a power consumption synthesis operation, and this causes a waste of computing resources of the power consumption synthesizer. To resolve this problem, still refer to FIG. 6. A bidirectional connection relationship may be established between the power consumption synthesizer and any power consumption accumulator. The power consumption synthesizer may apply to the power consumption accumulator for accumulated power consumption only at an end moment of each preset periodicity, and the power consumption accumulator may not report accumulated power consumption that is in each instantaneous time period to the power consumption synthesizer, but may continuously perform an accumulation operation until the power consumption accumulator receives an application sent by the power consumption synthesizer. The power consumption accumulator sends, to the power consumption synthesizer, power consumption that is caused by a processor core in the preset periodicity and that is obtained through accumulation, and then restarts an accumulation operation of a next preset periodicity, to save computing resources of the power consumption synthesizer.

It should be noted that the foregoing power consumption storage performed by the power consumption calculator, the power consumption accumulator, and the power consumption synthesizer is only an optional implementation. In another optional implementation, the power consumption calculator, the power consumption accumulator, and the power consumption synthesizer may also perform power consumption storage in the following manner, and the implementation is still described by referencing the parameters in the foregoing example.

The any power consumption calculator is configured to maintain a power consumption value that is of a connected processor core and that is at a present moment, where the power consumption value is total power consumption caused from time when the processor core starts running to the present moment. The power consumption value at the present moment may be obtained through calculation in any one of the following manners: The power consumption calculator obtains, at an interval of 0.03 ms, a power consumption signal change status (where for example, a toggle signal change status is a quantity of signal toggles in the 0.03 ms) of the connected processor core in the 0.03 ms, obtains, through calculation based on the power consumption signal change status in the 0.03 ms, power consumption caused by the connected processor core in the 0.03 ms, and accumulates the power consumption caused by the connected processor core in the 0.03 ms to the power consumption value at the present moment, to update the power consumption value at the present moment and send an updated power consumption value to the connected power consumption accumulator. Alternatively, the power consumption calculator obtains a total current power consumption signal quantity of the connected processor core at an interval of 0.03 ms (where for example, the toggle signal change status is a total quantity of signal toggles from the time when the processor core starts running to the present moment, and the quantity may be obtained by accessing status data of the processor core), and obtains, through calculation based on the total current power consumption signal quantity, the power consumption value that is of the connected processor core and that is at the present moment.

The any power consumption accumulator is configured to: accumulate power consumption values that are sent by connected power consumption calculators and that correspond to processor cores in a same processing unit at a same moment, to obtain a power consumption value corresponding to the processing unit, corresponding to the power consumption accumulator, at each moment, and send the power consumption value to the power consumption synthesizer. A power consumption value corresponding to the processing unit at any moment is total power consumption caused from the moment when the processing unit starts running to the moment.

The power consumption synthesizer is configured to accumulate power consumption values that correspond to processing units at a same moment and that are sent by power consumption accumulators, to obtain power consumption values corresponding to the processing units at each moment. Then, the power consumption synthesizer obtains, at an interval of 0.5 ms, power consumption values corresponding to the processing units at a present moment and power consumption values corresponding to the processing units at a moment before 0.5 ms, and subtracts the two values to obtain power consumption caused by the processing units in the 0.5 ms and send the power consumption to the memory 1. In addition, the power consumption synthesizer obtains, at an interval of 2 ms, power consumption values corresponding to the processing units at a present moment and power consumption values corresponding to the processing units at a moment before 2 ms, and subtracts the two values to obtain power consumption caused by the processing units in the 2 ms and send the power consumption to the memory 2.

It should be noted that all time parameters in the foregoing embodiments of this application may be set to be software-adjustable. For example, in a possible manner, each component (such as the power consumption calculator, the power consumption accumulator, the power consumption synthesizer, or the memory) in the power consumption control apparatus may be further connected to a client through a peripheral bus interface (advanced peripheral bus, APB). When it is determined that a time parameter used by a component is inappropriate, a user may send a target time parameter to the component via the client and the APB, so that the component can perform power consumption calculation, power consumption accumulation, power consumption synthesis, power consumption storage, or the like based on the target time parameter configured by the user.

It should be understood that, the foregoing content before a power consumption regulator is described by using an example in which power consumption data is stored. However, in an actual operation, the power consumption in the foregoing content may be replaced with other data that can represent the power consumption, for example, a current. This is not specifically limited in this application.

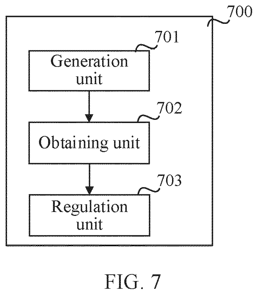

According to the foregoing method, FIG. 7 is a schematic diagram of a structure of a power consumption control apparatus 700 according to an embodiment of this application. The power consumption control apparatus 700 may be a chip or a circuit, for example, a chip or a circuit that may be disposed in a processor. The power consumption control apparatus 700 may correspond to the power consumption control apparatus in the foregoing method. The power consumption control apparatus 700 may implement steps of any one or more corresponding methods shown in FIG. 2 to FIG. 6. As shown in FIG. 7, the power consumption control apparatus 700 may include a generation unit 701, an obtaining unit 702, and a regulation unit 703.

In this embodiment of this application, when receiving information, the obtaining unit 702 may be a receiving unit or a receiver, and the receiving unit or the receiver may be a radio frequency circuit. In specific implementation, the generation unit 701 is configured to generate a constant-frequency clock signal to provide an operating clock for each component in the power consumption regulation apparatus. The obtaining unit 702 may obtain, in the operating clock provided by the constant-frequency clock signal, power consumption caused by one or more processing units in the connected system-on-a-chip in a period of time. The regulation unit 703 may regulate current power consumption of the one or more processing units based on the power consumption.

For concepts, explanations, detailed descriptions, and other steps related to the power consumption control apparatus 700 and the technical solution provided in this embodiment of this application, refer to descriptions of the content in the foregoing method or another embodiment. Details are not described herein again.

It may be understood that, for functions of units in the foregoing power consumption control apparatus 700, refer to implementation of the corresponding method embodiment. Details are not described herein again.

It should be understood that division of the units of the power consumption control apparatus 700 is merely logical function division. In actual implementation, all or some of the units may be integrated into one physical entity, or may be physically separated. In this embodiment of this application, the generation unit 701 may be implemented by the second clock generator in FIG. 2 or FIG. 6, and the obtaining unit 702 and the regulation unit 703 may be implemented by the power consumption regulator in FIG. 6.

According to the method provided in embodiments of this application, this application further provides a computer program product. The computer program product includes computer program code. When the computer program code is run on a computer, the computer is enabled to perform the method according to any one of embodiments shown in FIG. 1 to FIG. 6.

According to the method provided in embodiments of this application, this application further provides a computer-readable storage medium. The computer-readable storage medium stores program code. When the program code is run on a computer, the computer is enabled to perform the method according to any one of embodiments shown in FIG. 1 to FIG. 6.

Terminologies such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, various illustrative logical blocks (illustrative logical blocks) and steps (steps) described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatuses, and units, refer to a corresponding process in the foregoing method embodiments, and details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units Some or all of the units may be selected based on actual requirements to achieve the objectives of the solutions in embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A power consumption control apparatus, comprising a constant-frequency clock generator and a power consumption regulator, wherein the power consumption regulator is connected to one or more processing units in a system-on-a-chip SoC;
the constant-frequency clock generator is configured to generate a constant-frequency clock signal and provide the constant-frequency clock signal for the power consumption regulator; and
the power consumption regulator is configured to: obtain, by an operating clock provided by the constant-frequency clock signal, power consumption caused by the one or more processing units in a period of time, and regulate current power consumption of the one or more processing units based on the power consumption.

2. The apparatus according to claim 1, wherein when the one or more processing units comprise at least two processing units,
the one or more processing units are located in a same voltage domain, and different processing units in the one or more processing units use different operating clocks.

3. The apparatus according to claim 1 or 2, wherein the power consumption regulator is specifically configured to:
determine a value of the one or more processing units in a preset current indicator based on the power consumption caused by the one or more processing units in the period of time; and
when the value of the one or more processing units in the preset current indicator meets a first regulation threshold corresponding to the preset current indicator, regulate the current power consumption of the one or more processing units based on a regulation amplitude corresponding to the first regulation threshold, wherein
the first regulation threshold is one of at least two regulation thresholds corresponding to the preset current indicator, and each of the at least two regulation thresholds corresponds to one regulation amplitude.

4. The apparatus according to claim 3, wherein the preset current indicator comprises a peak current indicator and/or a current change rate indicator.

5. The apparatus according to claim 3 or 4, wherein when the preset current indicator comprises the peak current indicator,
if a peak current of the one or more processing units in the period of time meets a plurality of regulation thresholds corresponding to the peak current indicator, the first regulation threshold is a largest regulation threshold in the plurality of regulation thresholds that are met.

6. The apparatus according to any one of claims 3 to 5, wherein when the preset current indicator comprises the current change rate indicator,
if a current change rate of the one or more processing units in the period of time meets a plurality of regulation thresholds corresponding to the current change rate indicator, the first regulation threshold is a regulation threshold with a largest absolute value in the plurality of regulation thresholds that are met.

7. The apparatus according to any one of claims 1 to 6, further comprising a storage unit connected to the power consumption regulator;
the storage unit is configured to store, based on a preset periodicity, power consumption caused by the one or more processing units in each periodicity; and
the power consumption regulator is further configured to: obtain, from the storage unit, power consumption caused by the one or more processing units in any periodicity, and use the power consumption as the power consumption caused by the one or more processing units in the period of time.

8. The apparatus according to claim 7, wherein the storage unit comprises K memories, the K memories respectively correspond to K preset periodicities, and K is a positive integer greater than or equal to 2; and
any one of the K memories is configured to store, based on a preset periodicity corresponding to the memory, power consumption caused by the one or more processing units in each preset periodicity corresponding to the memory.

9. The apparatus according to claim 7 or 8, further comprising one or more power consumption calculator groups, one or more power consumption accumulators, and a power consumption statistics collector that separately correspond to the one or more processing units, wherein each of the one or more power consumption calculator groups comprises a plurality of power consumption calculators, and the plurality of power consumption calculators comprised in each power consumption calculator group are respectively connected to a plurality of processor cores in a corresponding processing unit; a plurality of power consumption calculators comprised in a power consumption calculator group corresponding to any processing unit are connected to a power consumption accumulator corresponding to the storage unit; the one or more power consumption accumulators are connected to the power consumption statistics collector;
a power consumption calculator connected to any processor core is configured to: obtain power consumption signals of the processor core in each instantaneous time period, obtain, through calculation based on the power consumption signals, power consumption caused by the processor core in each instantaneous time period, and send the power consumption to a connected power consumption accumulator;
any power consumption accumulator is configured to: accumulate power consumption that is sent by connected power consumption calculators and that is caused by processor cores in a same instantaneous time period, to obtain power consumption caused by a corresponding processing unit in each instantaneous time period, and send the power consumption to the power consumption statistics collector; and
the power consumption statistics collector is configured to: accumulate power consumption that is caused by the one or more processing units in instantaneous time periods of one periodicity and that is sent by the one or more power consumption accumulators, to obtain the power consumption caused by the one or more processing units in each periodicity, and send the power consumption to the storage unit.

10. The apparatus according to claim 9, wherein the power signal corresponding to the any processor core comprises one or more of the following content:
a toggle signal corresponding to a component that is in the processor core, a level signal corresponding to a component that is in the processor core, a clock gating signal corresponding to a component that is in the processor core, and a register signal corresponding to a register that is in the processor core.

11. The apparatus according to any one of claims 1 to 10, wherein the power consumption regulator is further connected to a frequency regulator and/or a voltage regulator corresponding to the one or more processing units, and the frequency regulator and/or the voltage regulator corresponding to the one or more processing units and the one or more processing units are located on the same SoC; and
the power consumption regulator is specifically configured to: when the current power consumption of the one or more processing units needs to be reduced, send a frequency reduction regulation instruction to the frequency regulator, wherein the frequency reduction regulation instruction is used by the frequency regulator to reduce operating frequency of the one or more processing units or extend several periodicities and then provide an operating clock for the one or more processing units again; and/or send a voltage reduction regulation instruction to the voltage regulator, wherein the voltage reduction regulation instruction is used by the voltage regulator to reduce an operating voltage of the one or more processing units.

12. A processor, comprising the power consumption control apparatus according to any one of claims 1 to 11 and one or more processing units, wherein the one or more processing units are deployed on a system-on-a-chip SoC, and the power consumption control apparatus is connected to the one or more processing units; and
the power consumption control apparatus is configured to regulate current power consumption of the one or more processing units based on power consumption caused by the one or more processing units in a period of time.

13. A power consumption control method, wherein the method is applicable to a power consumption control apparatus, the power consumption control apparatus uses a constant-frequency clock signal as an operating clock, the power consumption control apparatus is connected to one or more processing units in a system-on-a-chip SoC, and the method comprises:
obtaining power consumption caused by the one or more processing units in a period of time; and
regulating current power consumption of the one or more processing units based on the power consumption.

14. The method according to claim 13, wherein when the one or more processing units comprise at least two processing units,
the one or more processing units are located in a same voltage domain, and different processing units in the one or more processing units use different operating clocks.

15. The method according to claim 13 or 14, wherein the method further comprises:
determining a value of the one or more processing units in a preset current indicator based on the power consumption caused by the one or more processing units in the period of time; and
when the value of the one or more processing units in the preset current indicator meets a first regulation threshold corresponding to the preset current indicator, regulating the current power consumption of the one or more processing units based on a regulation amplitude corresponding to the first regulation threshold, wherein
the first regulation threshold is one of at least two regulation thresholds corresponding to the preset current indicator, and each of the at least two regulation thresholds corresponds to one regulation amplitude.

16. The method according to claim 15, wherein the preset current indicator comprises a peak current indicator and/or a current change rate indicator.

17. The method according to claim 15 or 16, wherein the method further comprises:
when the preset current indicator comprises the peak current indicator, if a peak current of the one or more processing units in the period of time meets a plurality of regulation thresholds corresponding to the peak current indicator, the first regulation threshold is a largest regulation threshold in the plurality of regulation thresholds that are met.

18. The method according to any one of claims 15 to 17, wherein the method further comprises:
when the preset current indicator comprises the current change rate indicator, if a current change rate of the one or more processing units in the period of time meets a plurality of regulation thresholds corresponding to the current change rate indicator, the first regulation threshold is a regulation threshold with a largest absolute value in the plurality of regulation thresholds that are met.

19. The method according to any one of claims 13 to 18, wherein the method further comprises:
storing, based on a preset periodicity, power consumption caused by the one or more processing units in each periodicity; and
obtaining power consumption caused by the one or more processing units in any periodicity, and using the power consumption as the power consumption caused by the one or more processing units in the period of time.

20. The method according to claim 19, wherein the method further comprises:
separately storing, based on K preset periodicities, power consumption caused by the one or more processing units in each periodicity corresponding to each of the K preset periodicities, wherein K is a positive integer greater than or equal to 2; and
for each preset periodicity, obtaining power consumption caused by the one or more processing units in any periodicity corresponding to the preset periodicity, and using the power consumption as the power consumption caused by the one or more processing units in the period of time.

21. The method according to claim 19 or 20, wherein the method further comprises:
for any one of the one or more processing units, obtaining power consumption signals of each processor core in the processing unit in each instantaneous time period, obtaining, through calculation based on the power consumption signals, power consumption caused by the processor core in each instantaneous time period, and accumulating power consumption caused by processor cores in the processing unit in a same instantaneous time period, to obtain power consumption caused by the processing unit in each instantaneous time period; and
accumulating power consumption caused by the one or more processing units in instantaneous time periods of one periodicity, to obtain the power consumption caused by the one or more processing units in each periodicity.

22. The method according to claim 21, wherein a power signal corresponding to any processor core comprises one or more of the following content:
a toggle signal corresponding to a component that is in the processor core, a level signal corresponding to a component that is in the processor core, a clock gating signal corresponding to a component that is in the processor core, and a register signal corresponding to a register that is in the processor core.

23. The method according to any one of claims 13 to 22, wherein the method further comprises:
when the current power consumption of the one or more processing units needs to be reduced,
sending a frequency reduction regulation instruction to a frequency regulator corresponding to the one or more processing units, wherein the frequency reduction regulation instruction is used by the frequency regulator corresponding to the one or more processing units to reduce operating frequency of the one or more processing units or extend several periodicities and then provide an operating clock for the one or more processing units again; and/or
sending a voltage reduction regulation instruction to a voltage regulator corresponding to the one or more processing units, wherein the voltage reduction regulation instruction is used by the voltage regulator corresponding to the one or more processing units to reduce an operating voltage of the one or more processing units.
